# EUROPÄISCHE PATENTSCHRIFT

(11) **EP 1 404 485 B1**
(45) Veröffentlichungstag und Bekanntmachung des Hinweises auf die Patenterteilung: **23.02.2011**
(21) Anmeldenummer: 02751027.0
(22) Anmeldetag: 14.06.2002
(51) Int. Cl.: B23P 25/00, B23Q 11/00, B23Q 11/10

(54) **VERFAHREN UND VERWENDUNG EINER VORRICHTUNG ZUM SPANENDEN BEARBEITEN EINES WERKSTÜCKS**
METHOD AND USE OF A DEVICE FOR METAL-CUTTING MACHINING A WORKPIECE
PROCÉDÉ ET UTILISATION D'UN DISPOSITIF POUR USINER UNE PIÈCE PAR ENLÈVEMENT DE COPEAUX

(30) Priorität: 06.07.2001 DE 10133003
(43) Veröffentlichungstag der Anmeldung: 07.04.2004
(73) Patentinhaber: Dürr Ecoclean GmbH, 70794 Filderstadt (DE)
(72) Erfinder: ALVAREZ-VEGA, Antonio, 52224 Stolberg (DE)
(74) Vertreter: Hörner, Andreas
(86) Internationale Anmeldenummer: PCT/EP2002/006552
(87) Internationale Veröffentlichungsnummer: WO 2003/004216

(56) Entgegenhaltungen:
- EP-A- 1 166 958
- DE-A- 4 424 452
- DE-A- 19 528 429
- US-A- 3 176 387
- US-A- 4 854 026

## Beschreibung

Die vorliegende Erfindung betrifft ein Verfahren zum spanenden Bearbeiten eines Werkstücks.

Ferner betrifft die vorliegende Erfindung die Verwendung einer Vorrichtung zum spanenden Bearbeiten eines Werkstücks.

Die spanende Bearbeitung von Werkstücken, insbesondere von Werkstücken für den Motoren- und Getriebebau, beispielsweise von Zylinderköpfen, Kurbelgehäusen oder Getriebegehäusen, auf Transferstraßen oder in Bearbeitungszentren erfolgt unter Zufuhr sehr großer Mengen von flüssigen Kühlschmiermitteln, welche dazu dienen, das Werkstück und das Bearbeitungswerkzeug zu kühlen, das Bearbeitungswerkzeug zu schmieren und die bei der Bearbeitung des Werkstücks abgehobenen Späne abzuführen.

Diese herkömmliche Schmierung und Kühlung des Bearbeitungswerkzeugs durch externes Zuführen großer Mengen eines flüssigen Kühlschmiermittels weist den Nachteil auf, daß für die großen Mengen an Kühlschmiermittel oder Kühlschmiermittel-Emulsion aufwendige Umlauf- und Aufbereitungssysteme erforderlich sind.

Ferner kann es vorkommen, daß bei der Bearbeitung des Werkstücks abgehobene Späne durch das unter Druck zugeführte Kühlschmiermittel in an dem Werkstück vorhandene Ausnehmungen hineingepreßt werden, statt aus dem Werkstück abgeführt zu werden.

Die US-A-3 176 387 offenbart ein Verfahren zum spanenden Bearbeiten eines Werkstücks, umfassend ein Einbringen eines wasserlöslichen Wachses im fließfähigen Zustand in Ausnehmungen des Werkstücks; eine Verfestigung des Wachses in den Ausnehmungen; eine spanende Bearbeitung des Werkstücks, bei der ein Bearbeitungswerkzeug in direkten Kontakt mit dem Wachs kommt; und eine Überführung des restlichen Wachses in den Ausnehmungen des Werkstücks in den fließfähigen Zustand und eine Entfernung des Wachses aus dem Werkstück.

Der vorliegenden Erfindung liegt die Aufgabe zugrunde, ein Verfahren zum spanenden Bearbeiten eines Werkstücks zu schaffen, bei dem eine ausreichende Schmierung des Bearbeitungswerkzeugs und eine ausreichende Kühlung des Bearbeitungswerkzeugs und des bearbeitenden Werkstücks gewährleistet sind und zugleich verhindert wird, dass bei der Bearbeitung erzeugte Späne in Ausnehmungen des Werkstücks zurückbleiben.

Diese Aufgabe wird erfindungsgemäß durch ein Verfahren gemäß Anspruch 1 gelöst, welches folgende Verfahrensschritte umfasst:
- Einbringen eines Schmiermittels im fließfähigen Zustand in mindestens eine Ausnehmung des Werkstücks;
- Verfestigung des Schmiermittels in der Ausnehmung;
- spanende Bearbeitung des Werkstücks, bei der mindestens ein Bearbeitungswerkzeug in direkten Kontakt mit dem Schmiermittel kommt und durch das Schmiermittel geschmiert wird, wobei das Schmiermittel bei der Bearbeitung des Werkstücks vom festen in den flüssigen Zustand übergeht;
- Überführung des restlichen Schmiermittels in der Ausnehmung des Werkstücks in den fließfähigen Zustand und Entfernung des Schmiermittels aus dem Werkstück.

Ferner wird die der Erfindung zugrundeliegende Aufgabe durch eine Verwendung einer Vorrichtung zum spanenden Bearbeiten eines Werkstücks nach Anspruch 12 gelöst.

Bei der erfindungsgemäßen Lösung erfolgt die Schmierung des Bearbeitungswerkzeugs somit durch ein Schmiermittel, welches bereits vor der spanenden Bearbeitung in das Werkstück eingebracht worden ist, sich in dem Werkstück verfestigt hat und während der spanenden Bearbeitung in direkten Kontakt mit dem Bearbeitungswerkzeug kommt, um dieses zu schmieren.

Dabei nimmt das Schmiermittel zugleich bei der spanenden Bearbeitung des Werkstücks entstehende Wärme auf, so daß das Bearbeitungswerkzeug und das Werkstück gekühlt werden.

Auf die externe Zufuhr von flüssigem Kühlschmiermittel während der spanenden Bearbeitung des Werkstücks kann daher ganz oder zumindest teilweise verzichtet werden.

Ferner ist gewährleistet, daß die bei der Bearbeitung des Werkstücks erzeugten Späne nicht in die Ausnehmung des Werkstücks hineingepreßt werden, da zum einen die Ausnehmung des Werkstücks durch das Schmiermittel ausgefüllt ist und zum anderen die Späne nicht durch ein extern zugeführtes Kühlschmiermittel mit einem in das Innere des Werkstücks gerichteten Druck beaufschlagt werden.

Aus der DE 195 28 429 A1 ist ein Verfahren zur spanabhebenden Bearbeitung eines mit einem Hohlraum ausgebildeten Werkstückes bekannt, wobei das Werkstück mit dem Hohlraum verbundene Durchbrechungen aufweist und die Durchbrechungen vor der spanabhebenden Bearbeitung mittels eines die Zustandsphase von flüssig zu fest wechselnden Mediums verschlossen werden, um eine Ablage von Bearbeitungsspänen im Hohlraum des Werkstücks zu vermeiden. Bei diesem bekannten Verfahren kommt das vor der spanabhebenden Bearbeitung in das Werkstück eingebrachte Medium jedoch nicht mit dem Bearbeitungswerkzeug in Kontakt, so daß dieses Medium weder eine Schmierung noch eine ausreichende Kühlung des Bearbeitungswerkzeugs bewirken kann. Bei diesem bekannten Verfahren müssen daher während der spanenden Bearbeitung große Mengen eines flüssigen Kühlschmiermittels zugeführt werden, um das Bearbeitungswerkzeug zu schmieren und zu kühlen. Aus der DE 44 24 452 A1 ist ein Verfahren zum Verhindern von Bearbeitungsrückständen in spanend zu bearbeitenden Hohlkörpern bekannt, bei dem vor der spanenden Bearbeitung die Hohlräume in dem Werkstück mit einem Schaum ausgeschäumt werden, um zu verhindern, dass Späne oder andere Verunreinigungen während der Bearbeitung in die Hohlräume gelangen und sich dort festsetzen. Dieser Schaum kommt jedoch während der spanenden Bearbeitung des Werkstücks nicht mit dem Bearbeitungswerkzeug in Kontakt und weist auch keine Schmiereigenschaften auf, so dass der in das Werkstück eingebrachte Schaum keine Schmierung und keine ausreichende Kühlung des Bearbeitungswerkzeugs bewirken kann. Auch bei dem Verfahren gemäß der DE 44 24 452 A1 müssen daher große Mengen von Kühlschmiermittel während der spanenden Bearbeitung zugeführt werden.

Bei einer bevorzugten Ausgestaltung des erfindungsgemäßen Verfahrens ist vorgesehen, dass das Schmiermittel im schmelzflüssigen Zustand in die Ausnehmung des Werkstücks eingebracht wird.

Die Verfestigung des Schmiermittel in der Ausnehmung des Werkstücks erfolgt in diesem Falle durch Abkühlung des Schmiermittels unter dessen Erstarrungspunkt.

Besonders günstig ist es, wenn ein Schmiermittel verwendet wird, dessen Erstarrungspunkt höher als ungefähr 60°C, vorzugsweise höher als ungefähr 65°C, liegt. Hierdurch ist gewährleistet, dass sich das Schmiermittel in dem Werkstück bei Abkühlung auf Raumtemperatur verfestigt.

Um eine besonders gute Schmierung des Bearbeitungswerkzeugs während der spanenden Bearbeitung des Werkstücks zu erzielen, ist es von Vorteil, dass ein Schmiermittel verwendet wird, das bei der Bearbeitung des Werkstücks mittels des Bearbeitungswerkzeugs vom festen in den flüssigen Zustand übergeht.

Außerdem nimmt das Schmiermittel beim Übergang vom festen in den flüssigen Zustand latente Wärme auf, so dass zusätzlich zur Schmierung des Bearbeitungswerkzeugs eine besonders gute Kühlung des Bearbeitungswerkzeugs und des bearbeitenden Werkstücks gewährleistet ist.

Als Schmiermittel kann jeder Stoff verwendet werden, welcher vor der spanenden Bearbeitung im fließfähigen Zustand in das Werkstück eingebracht werden kann und sich in dem Werkstück verfestigen kann und bei der anschließenden spanenden Bearbeitung ausreichende Schmiereigenschaften für das Bearbeitungswerkzeug aufweist.

Vorzugsweise ist vorgesehen, dass ein Schmiermittel verwendet wird, welches ein Wachs, vorzugsweise ein Paraffinwachs, umfasst.

Besonders geeignet sind Flutwachse, wie sie im Automobilbau zum Fluten von korrosionsgefährdeten Hohlräumen von Fahrzeugkarosserien zum Zwecke des Langzeitkorrosionsschutzes verwendet werden.

Weist die mindestens eine Ausnehmung des Werkstücks neben der Schmiermittel-Einbringöffnung mindestens eine weitere Zugangsöffnung auf, so wird diese weitere Zugangsöffnung während des Einbringens des Schmiermittels in das Werkstück vorzugsweise mittels eines Verschlusselements verschlossen, um ein Wiederaustreten des eingebrachten Schmiermittels durch diese weitere Zugangsöffnung zu verhindern.

Bei einer bevorzugten Ausgestaltung des erfindungsgemäßen Verfahrens ist vorgesehen, daß das Verschlußelement vor der spanenden Bearbeitung des Werkstücks wieder von dem Werkstück entfernt wird.

Alternativ hierzu kann jedoch auch vorgesehen sein, daß das Verschlußelement, beispielsweise ein Verschlußstopfen, während der spanenden Bearbeitung des Werkstücks an dem Werkstück verbleibt.

Um zu verhindern, daß bei der spanenden Bearbeitung des Werkstücks Späne in nicht bearbeitete Ausnehmungen des Werkstücks gelangen, kann vorgesehen sein, daß vor der spanenden Bearbeitung des Werkstücks ein Teil des Schmiermittels in eine solche Ausnehmung des Werkstücks eingebracht wird, welche bei der spanenden Bearbeitung des Werkstücks nicht bearbeitet wird.

Das Einbringen des Schmiermittels in das Werkstück, das Bearbeiten des Werkstücks und das Ausbringen des verbliebenen Schmiermittels aus dem Werkstück können in ein und demselben Bereich einer Vorrichtung zur Bearbeitung des Werkstücks durchgeführt werden.

Um kürzere Taktzeiten bei der Bearbeitung der Werkstücke einhalten zu können, ist jedoch bei einer bevorzugten Ausgestaltung des erfindungsgemäßen Verfahrens vorgesehen, daß das Schmiermittel in einer Schmiermittel-Einbringstation in die mindestens eine Ausnehmung des Werkstücks eingebracht wird, anschließend das Werkstück in eine Bearbeitungsstation gefördert wird, anschließend das Werkstück in der Bearbeitungsstation spanend bearbeitet wird, anschließend das Werkstück in eine Schmiermittel-Ausbringstation gefördert wird und anschließend das in dem Werkstück verbliebene Schmiermittel in der Schmiermittel-Ausbringstation aus dem Werkstück ausgebracht wird.

Um das Schmiermittel nach der spanenden Bearbeitung aus dem Werkstück zu entfernen, kann insbesondere vorgesehen sein, dass das Werkstück erwärmt und während und/oder nach der Erwärmung gedreht wird.

Das Schmiermittel wird durch die Erwärmung des Werkstücks wieder fließfähig gemacht, insbesondere geschmolzen, so dass das Schmiermittel aus den Ausnehmungen des Werkstücks herausfließen kann.

Bei einer bevorzugten Ausgestaltung des erfindungsgemäßen Verfahrens wird das Werkstück durch Beaufschlagung mit einem erwärmten Fluid, vorzugsweise mit erwärmter Luft, erwärmt.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Darstellung einer Vorrichtung zum spanenden Bearbeiten eines Werkstücks, welche eine Wachseinfüllstation, eine Bearbeitungsstation und eine Wachsausbringstation umfaßt;
- Fig. 2: eine schematische Draufsicht auf ein in der Vorrichtung aus Fig. 1 zu bearbeitendes Werkstück;
- Fig. 3 bis 8: schematische Schnitte durch einen Teilbereich des Werkstücks aus Fig. 2, welche aufeinanderfolgende Schritte der Bearbeitung des Werkstücks in der Vorrichtung aus Fig. 1 darstellen;
- Fig. 9: eine schematische Darstellung der Wachseinfüllstation der Vor- richtung aus Fig. 1, vor dem Einfüllen des Wachses in das Werk- stück;
- Fig. 10: eine schematische Darstellung der Wachseinfüllstation der Vor- richtung aus Fig. 1, während des Einfüllens des Wachses;
- Fig. 11: eine schematische Draufsicht auf die Wachsausbringstation der Vorrichtung aus Fig. 1; und
- Fig. 12: eine schematische Seitenansicht der Wachsausbringstation der Vorrichtung aus Fig. 1.

Gleiche oder funktional äquivalente Elemente sind in allen Figuren mit denselben Bezugszeichen bezeichnet.

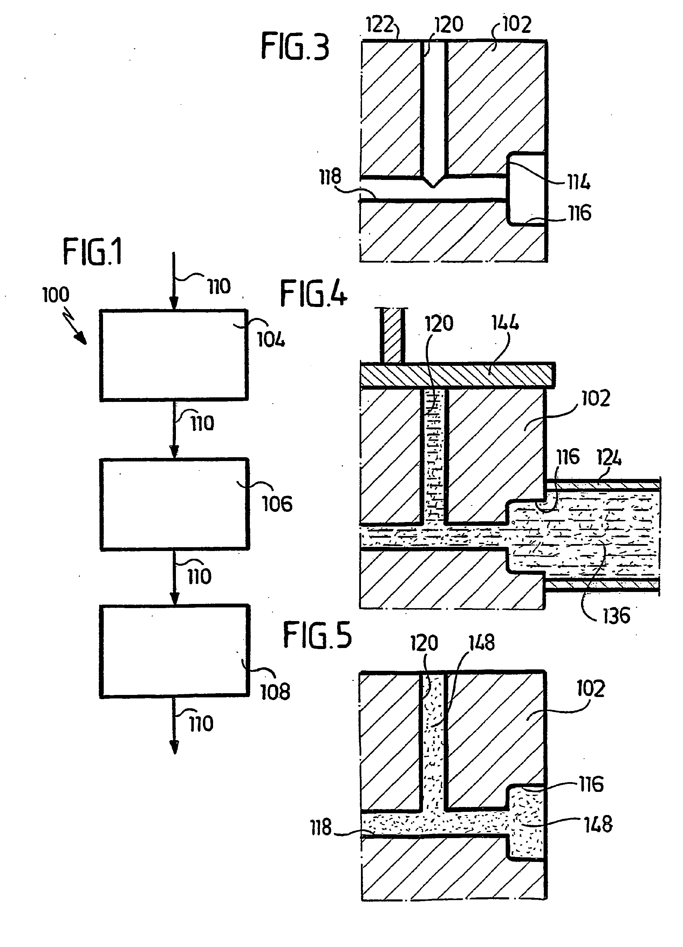

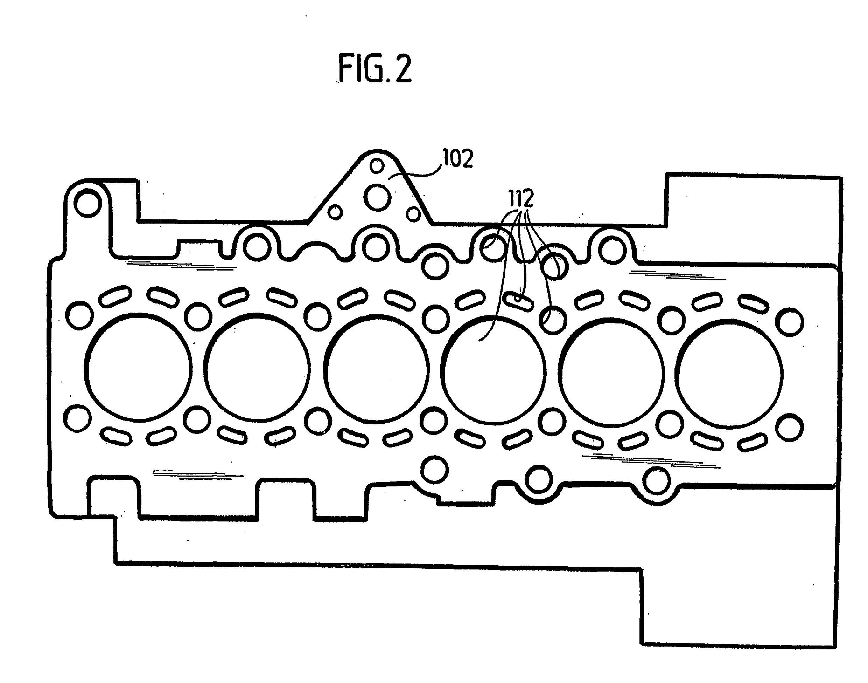

Eine in den Fig. 1 sowie 9 bis 12 dargestellte, als Ganzes mit 100 bezeichnete Vorrichtung zur spanenden Bearbeitung eines in Fig. 2 dargestellten Werkstückes 102 umfaßt, wie am besten aus Fig. 1 zu ersehen ist, eine Wachseinfüllstation 104, eine Bearbeitungsstation 106 und eine Wachsausbringstation 108 sowie eine (nicht dargestellte) Fördervorrichtung zum Fördern der Werkstücke 102 längs der Förderrichtung 110 in die Vorrichtung 100 hinein, durch die drei Stationen 104, 106, und 108 hindurch und aus der Vorrichtung 100 hinaus.

Die Werkstücke 102 können beispielsweise mittels Hubbalken oder Schubstangen auf einem Rollenförderer gefördert werden.

Die durch die Vorrichtung 100 zu fördernden und in derselben zu bearbeiten Werkstücke 102 sind beispielsweise Motorblöcke eines Verbrennungsmotors (siehe Fig. 2) und weisen eine Vielzahl von das Werkstück 102 durchsetzenden oder in dem Werkstück endenden Ausnehmungen 112 auf.

Solche Ausnehmungen können beispielsweise Kühlwasseröffnungen, Ölversorgungsbohrungen oder Gewindebohrungen sein.

Einige der Ausnehmungen 112 sind von den anderen Ausnehmungen isoliert; andere Ausnehmungen 112 stehen miteinander in Verbindung.

In Fig. 3 ist ein abschnittsweiser Schnitt durch das Werkstück 102 gezeigt, in welchem eine in den Boden 114 einer Vertiefung 116 des Werkstücks 102 mündende erste Bohrung 118 und eine senkrecht zu der ersten Bohrung 118 in dieselbe einmündende zweite Bohrung 120, welche an ihrem der ersten Bohrung 118 abgewandten Ende an einer Oberseite 122 des Werkstücks 102 mündet, zu erkennen sind.

Das Werkstück 102 wird mittels der Fördervorrichtung in die Wachseinfüllstation 104 der Vorrichtung 100 gefördert und dort in einer Wachseinfüllstellung stillgesetzt.

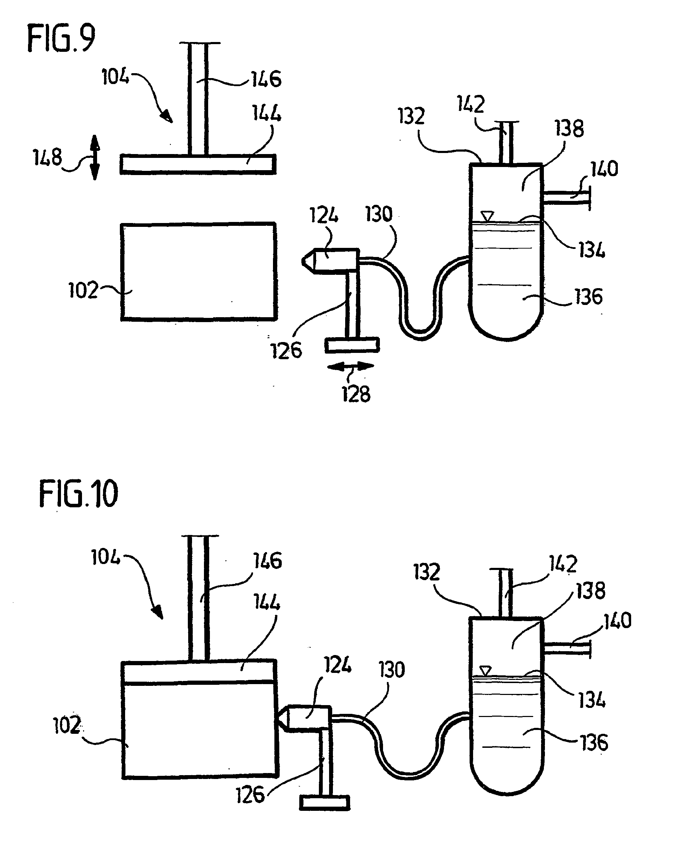

Wie aus Fig. 9 zu ersehen ist, umfaßt die Wachseinfüllstation 104 mindestens eine Wachseinfülldüse 124, die an einer verschiebbaren Halterung 126 gehalten ist, die mittels einer (nicht dargestellten) Verschiebungseinrichtung längs der Richtung des Doppelpfeils 128 zwischen einer (in Fig. 9 dargestellten) Ruhestellung und einer (in Fig. 10 dargestellten) Wachseinfüllstellung verschiebbar ist.

Die Wachseinfülldüse 124 ist über eine flexible Wachszuführleitung 130 mit einem Wachsspeicherbehälter 132 verbunden, welcher bis zu einem Füllpegel 134 mit flüssigem Wachs 136 gefüllt ist.

In den oberhalb des flüssigen Wachses 136 verbleibenden Luftraum 138 im Innenraum des Wachsspeicherbehälters 132 mündet ein Wachszuführrohr 140, über welches dem Wachsspeicherbehälter 132 flüssiges Wachs aus einer Wachsringleitung oder aus einem Wachsreservoir zuführbar ist, und eine Druckluftleitung 142, über welche der Innenraum des Wachsspeicherbehälters 132 mit einem erhöhten Luftdruck beaufschlagbar ist, um flüssiges Wachs aus dem Wachsspeicherbehälter 132 durch die Wachszuführleitung 130 in die Wachseinfülldüse 124 zu fördern.

In der in Fig. 9 dargestellten Ruhestellung der Wachseinfüllstation 104 ist die Druckluftleitung 142 mittels eines (nicht dargestellten) Sperrventils geschlossen.

Ferner umfaßt die Wachseinfüllstation 104 mindestens ein Verschlußelement 144, beispielsweise in der Form einer Verschlußplatte, welches an einer verschiebbaren Halterung 146 gehalten ist, die mittels einer (nicht dargestellten) Verschiebungseinrichtung längs der Richtung des Doppelpfeils 148 zwischen der in Fig. 9 dargestellten Ruhestellung und einer in Fig. 10 dargestellten Verschlußstellung verschiebbar ist.

Nachdem das Werkstück 102 in die Wachseinfüllstation 104 gefördert und dort stillgesetzt worden ist, wird die Wachseinfülldüse 124 mittels der verschiebbaren Halterung 126 in die in Fig. 10 dargestellte Arbeitsstellung gebracht, in welcher die Wachseinfülldüse 124 an einer Außenfläche des Werkstücks 102 anliegt und die Austrittsöffnung der Wachseinfülldüse 124 die Vertiefung 116, in welche die erste Bohrung 118 einmündet, überdeckt (siehe Fig. 4).

Ferner wird das Verschlußelement 144 mittels der verschiebbaren Halterung 146 in die in Fig. 10 dargestellte Verschlußstellung gebracht, in welcher das Verschlußelement 144 die Mündungsöffnung der zweiten Bohrung 120 an der Oberseite 122 des Werkstücks 102 verschließt (siehe Fig. 4).

Anschließend wird der Innenraum des Wachsspeicherbehälters 132 durch Öffnen der Druckluftleitung 142 mit einem erhöhten Druck beaufschlagt, so daß flüssiges Wachs 136 durch die Wachszuführleitung 130 und die Wachseinfülldüse 124 in die Vertiefung 116, in die erste Bohrung 118 und von dort in die mit der ersten Bohrung 118 in Verbindung stehende zweite Bohrung 120 gelangt.

Das Verschlußelement 144 verhindert bei diesem Wachsflutvorgang, daß flüssiges Wachs durch die Mündungsöffnung der zweiten Bohrung 120 aus dem Werkstück 102 heraus gelangt.

Nach dem Fluten der ersten Bohrung 118 und mit derselben in Verbindung stehender Ausnehmungen in dem Werkstück 102 wird die Wachseinfülldüse 124 in eine weitere Arbeitsstellung an einer weiteren mit Wachs zu befüllenden Bohrung verfahren, um auch diese weitere Bohrung mit Wachs zu fluten.

Sind alle zu flutenden Hohlräume des Werkstückes 102 mit Wachs befüllt, wird die Wachseinfülldüse 124 in ihre Ruhestellung zurückgebracht.

Ferner wird auch das Verschlußelement 144 in seine Ruhestellung zurück verfahren.

Statt mehrere Hohlräume des Werkstücks 102 nacheinander mittels derselben Wachseinfülldüse 124 zu fluten, kann auch vorgesehen sein, daß die Wachseinfüllstation 104 mehrere Wachseinfülldüsen 124 umfaßt, um mehrere Hohlräume des Werkstücks 102 gleichzeitig fluten zu können.

Diese mehreren Wachseinfülldüsen können an denselben Wachsspeicherbehälter 132 oder an verschiedene Wachsspeicherbehälter 132 angeschlossen sein.

Ferner ist es möglich, daß das Verschlußelement 144 während des Wachseinfüllens von der ersten Verschlußstellung in eine oder mehrere weitere Verschlußstellungen an dem Werkstück 102 verfahren wird, um mit dem jeweils befüllten Hohlraum des Werkstücks 102 in Verbindung stehende Mündungsöffnungen des Werkstücks 102 zu verschließen.

Ferner ist es möglich, daß die Wachseinfüllstation 104 mehrere Verschlußelemente 144 umfaßt, die dazu verwendet werden, voneinander verschiedene Mündungsöffnungen von Hohlräumen des Werkstücks 102 während des Wachseinfüllvorgangs zu verschließen.

Schließlich kann auch vorgesehen sein, statt die Wachseinfülldüse und das Verschlußelement 144 zu bewegen, das Werkstück 102 in voneinander verschiedene Wachseinfüllstellungen relativ zu der Wachseinfülldüse 124 und dem Verschlußelement 144 zu verschieben und/oder zu drehen.

Nach dem Einfüllen des flüssigen Wachses in die erste Bohrung 118 und die zweite Bohrung 120 kühlt das Wachs unter seine Schmelztemperatur ab und erstarrt, so daß das erstarrte Wachs 148 beim anschließenden Transport des Werkstückes 102 aus der Wachseinfüllstation 104 in die Bearbeitungsstation 106 in dem Werkstück 102 verbleibt (siehe Fig. 5).

Nachdem das Werkstück 102 mittels der Fördervorrichtung in die Bearbeitungsstation 106 der Vorrichtung 100 gefördert und dort in einer Bearbeitungsstellung stillgesetzt worden ist, wird das Werkstück mittels in der Bearbeitungsstation 106 vorhandener Bearbeitungswerkzeuge spanend bearbeitet.

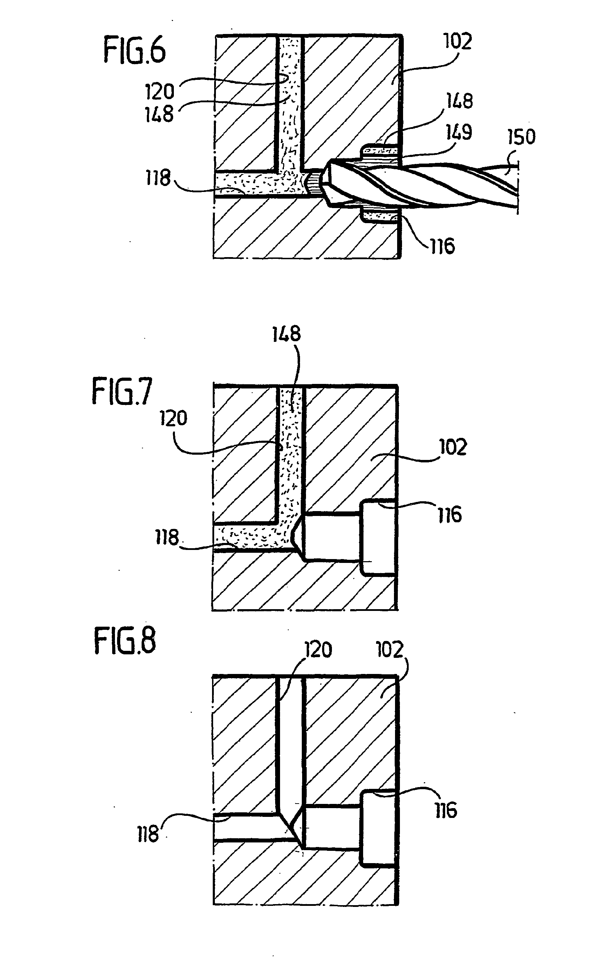

Eine solche spanende Bearbeitung kann beispielsweise mittels einer Bohrvorrichtung erfolgen, die einen Bohrer 150 umfaßt, welcher in die Vertiefung 116 des Werkstücks 102 eingeführt wird, um den äußeren Abschnitt der ersten Bohrung 118 zu erweitern (siehe Fig. 6).

Dabei wird das in der Vertiefung 116 und in der ersten Bohrung 118 befindliche verfestigte Wachs aufgrund der bei der spanenden Bearbeitung des Werkstücks 102 erzeugten Wärme zumindest teilweise über seine Schmelztemperatur hinaus erwärmt und aufgeschmolzen.

Das aufgeschmolzene Wachs 149 kommt während der spanenden Bearbeitung direkt mit dem Bearbeitungswerkzeug, beispielsweise dem Bohrer 150, in Kontakt, wodurch das Bearbeitungswerkzeug mittels des aufgeschmolzenen Wachses 149 zugleich geschmiert und gekühlt wird.

Die Kühlwirkung des Wachses wird dadurch verstärkt, daß das Wachs beim Aufschmelzen latente Wärme aufnimmt.

Das in den übrigen Hohlräumen des Werkstücks 102, welche nicht mit dem Bearbeitungswerkzeug direkt in Kontakt kommen, befindliche Wachs verhindert, daß bei der spanenden Bearbeitung des Werkstücks 102 anfallende Späne in diese weiteren Hohlräume, beispielsweise in die zweite Bohrung 120, hineingelangen können.

Ein für das Fluten der Hohlräume in dem Werkstück 102 geeignetes Wachs ist beispielsweise aus Paraffinwachsen sowie langkettigen Kohlenwasserstoffen zusammengesetzt.

Ein solches Wachs wird beispielsweise von der Firma Pfinder GmbH & Co., Rudolph-Diesel-Straße 14, in 71032 Böblingen, Deutschland, unter der Bezeichnung Flutwachs AP 2220/1 vertrieben.

Dieses Flutwachs weist einen Erstarrungspunkt von ungefähr 69°C auf und wird in dem Wachsspeicherbehälter 132 vorzugsweise bei einer Temperatur von ungefähr 115°C bis ungefähr 120°C in flüssigem Zustand gehalten.

Nach Beendigung der spanenden Bearbeitung des Werkstücks 102 und Entfernen des Bearbeitungswerkzeugs aus dem Werkstück 102 kühlt das im Werkstück 102 verbleibende Wachs wieder unter seine Erstarrungstemperatur ab und verfestigt sich (siehe Fig. 7).

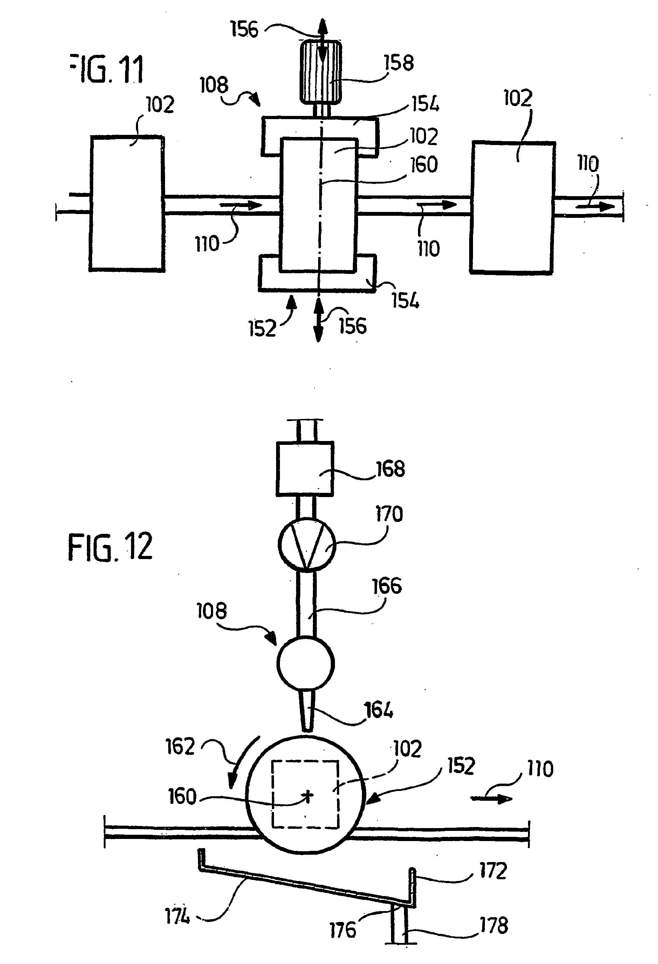

Das fertig bearbeitete Werkstück 102 wird mittels der Fördervorrichtung in die in den Fig. 11 und 12 dargestellte Wachsausbringstation 108 gefördert und dort in einer Arbeitsstellung stillgesetzt.

Wie aus Fig. 11 zu ersehen ist, umfaßt die Wachsausbringstation 108 eine Drehvorrichtung 152 mit zwei Drehhalterungen 154, welche mittels (nicht dargestellter) Verschiebeeinrichtungen längs der Richtungen der Doppelpfeile 156 in Fig. 11 von einer (nicht dargestellten) Ruhestellung in eine Arbeitsstellung verschiebbar sind, in welcher das jeweilige Werkstück 102 an den Drehhalterungen 154 drehfest gehalten ist.

Mindestens eine der Drehhalterungen 154 ist durch einen Drehantrieb 158 zu einer fortlaufenden Drehbewegung um eine Drehachse 160 der Drehvorrichtung 152 in der in Fig. 12 durch den Pfeil 162 angegebenen Drehrichtung antreibbar.

Oberhalb der Drehvorrichtung 152 und außerhalb des Störkreises der Drehhalterungen 152 ist eine Blasdüse 164 angeordnet, welcher über eine Luftzuführleitung 166, in welcher ein Lufterhitzer 168 und ein Gebläse 170, beispielsweise ein Seitenkanalverdichter, angeordnet sind, erwärmte Luft unter einem erhöhten Druck zugeführt wird.

Unterhalb der Drehvorrichtung 152 ist eine Abtropfwanne 172 zum Auffangen von aus dem Werkstück 102 abtropfendem Wachs angeordnet.

Die Bodenwand 174 ist zu einer Auslaßöffnung 176 hin geneigt, an welcher eine Wachs-Abführleitung 178 in die Abtropfwanne 172 mündet.

Die Abtropfwanne ist mittels einer (nicht dargestellten) Heizeinrichtung beheizbar, um das in dieselbe abtropfende Wachs flüssig zu halten.

Nachdem das Werkstück 102 zwischen den Drehhalterungen 154 abgesetzt worden ist, werden die Drehhalterungen 154 an das Werkstück 102 herangefahren, um das Werkstück 102 drehfest aufzunehmen.

Anschließend wird das Werkstück 102 mittels des Drehantriebs 158 um die mit der Längsachse des Werkstücks 102 zusammenfallende Drehachse 160 der Drehvorrichtung 152 gedreht.

Währenddessen wird aus der Umgebung angesaugte Luft durch den Lufterhitzer 168 auf eine Temperatur von ungefähr 150°C bis ungefähr 200°C erwärmt und von dem Gebläse 170 zu der Blasdüse 164 gefördert, aus deren Ausblasschlitz die erwärmte Luft mit erhöhter Geschwindigkeit auf das Werkstück 102 geblasen wird.

Durch die Beaufschlagung mit der erwärmten Blasluft erwärmen sich das Werkstück 102 und das darin enthaltene Wachs, so daß sich das Wachs verflüssigt und aufgrund der Schwerkraft durch die jeweils unten befindlichen Mündungsöffnungen der Hohlräume des Werkstücks 102 in die Abtropfwanne 172 abtropft.

Durch das Drehen des Werkstücks 102 während der Beaufschlagung mit der erwärmten Luft wird erreicht, daß jede Mündungsöffnung des Werkstücks 102 zumindest einmal nach unten in die Abtropfwanne 172 weist.

Die Drehgeschwindigkeit der Drehvorrichtung 152 wird so gewählt, daß jede Mündungsöffnung über eine ausreichend lange Zeit zu der Abtropfwanne 172 hin gerichtet bleibt, um ein vollständiges Auslaufen des in dem zu der Mündungsöffnung gehörenden Hohlraum des Werkstücks 102 enthaltenen Wachses zu ermöglichen.

Das in der Abtropfwanne 172 aufgefangene flüssige Wachs wird durch die Wachsabführleitung 178 einer Weiterverwendung zugeführt, beispielsweise in den Wachsspeicherbehälter 132 der Wachseinfüllstation 104 zurückgeführt. Wenn sämtliches in dem Werkstück 102 vorhandene Wachs aus dem Werkstück 102 ausgebracht worden ist, wird die Drehbewegung des Werkstücks 102 um die Drehachse 160 angehalten, und das Werkstück 102 wird durch Verfahren der Drehhalterungen 154 in ihre Ruhestellungen freigegeben und mittels der Fördervorrichtung längs der Förderrichtung 110 aus der Vorrichtung 100 herausgefördert, um einer weiteren Bearbeitung oder einer Lagerung zugeführt zu werden.

## Patentansprüche

1. Verfahren zum spanenden Bearbeiten eines Werkstücks (102), umfassend folgendes:
- Einbringen eines Schmiermittels im fließfähigen Zustand in mindestens eine Ausnehmung (118, 120) des Werkstücks (102);
- Verfestigung des Schmiermittels in der Ausnehmung (118, 120);
- spanende Bearbeitung des Werkstücks (102), bei der mindestens ein Bearbeitungswerkzeug (150) in direkten Kontakt mit dem Schmiermittel kommt und durch das Schmiermittel geschmiert wird, wobei das Schmiermittel bei der Bearbeitung des Werkstücks (102) mittels des Bearbeitungswerkzeugs (150) vom festen in den flüssigen Zustand übergeht;
- Überführung des restlichen Schmiermittels in der Ausnehmung (118, 120) des Werkstücks (102) in den fließfähigen Zustand und Entfernung des Schmiermittels aus dem Werkstück (102).

2. Verfahren nach Anspruch 1, **dadurch gekennzeichnet, dass** das Schmiermittel im schmelzflüssigen Zustand in die Ausnehmung (118, 120) des Werkstücks (102) eingebracht wird.

3. Verfahren nach einem der Ansprüche 1 oder 2, **dadurch gekennzeichnet, dass** ein Schmiermittel verwendet wird, dessen Erstarrungspunkt höher als ungefähr 60°C, vorzugsweise höher als ungefähr 65°C, liegt.

4. Verfahren nach einem der Ansprüche 1 bis 3, **dadurch gekennzeichnet, dass** ein Schmiermittel verwendet wird, welches ein Wachs, vorzugsweise ein Paraffinwachs, umfasst.

5. Verfahren nach einem der Ansprüche 1 bis 4, **dadurch gekennzeichnet, dass** die mindestens eine Ausnehmung (118, 120) eine Schmiermittel-Einbringöffnung und mindestens eine weitere Zugangsöffnung aufweist, die während des Einbringens des Schmiermittels mittels eines Verschlusselements (144) verschlossen wird.

6. Verfahren nach Anspruch 5, **dadurch gekennzeichnet, dass** das Verschlusselement (144) vor der spanenden Bearbeitung des Werkstücks (102) von dem Werkstück (102) entfernt wird.

7. Verfahren nach Anspruch 5, **dadurch gekennzeichnet, dass** das Verschlusselement (144) während der spanenden Bearbeitung des Werkstücks (102) an dem Werkstück (102) verbleibt.

8. Verfahren nach einem der Ansprüche 1 bis 7, **dadurch gekennzeichnet, dass** vor der spanenden Bearbeitung des Werkstücks ein Teil des Schmiermittels in eine Ausnehmung (120) des Werkstücks (102) eingebracht wird, welche bei der spanenden Bearbeitung des Werkstücks (102) nicht bearbeitet wird.

9. Verfahren nach einem der Ansprüche 1 bis 8, **dadurch gekennzeichnet, dass** das Schmiermittel in einer Schmiermittel-Einbringstation (104) in die mindestens eine Ausnehmung (118, 120) des Werkstücks (102) eingebracht wird,
anschließend das Werkstück (102) in eine Bearbeitungsstation (106) gefördert wird,
anschließend das Werkstück (102) in der Bearbeitungsstation (106) spanend bearbeitet wird,
anschließend das Werkstück (102) in eine Schmiermittel-Ausbringstation (108) gefördert wird und
anschließend das in dem Werkstück (102) verbliebene Schmiermittel in der Schmiermittel-Ausbringstation (108) aus dem Werkstück (102) ausgebracht wird.

10. Verfahren nach einem der Ansprüche 1 bis 9, **dadurch gekennzeichnet, dass** das Schmiermittel aus dem Werkstück (102) entfernt wird, indem das Werkstück (102) erwärmt und während und/oder nach der Erwärmung gedreht wird.

11. Verfahren nach Anspruch 10, **dadurch gekennzeichnet, dass** das Werkstück (102) durch Beaufschlagung mit einem erwärmten Fluid, vorzugsweise mit erwärmter Luft, erwärmt wird.

12. Verwendung einer Vorrichtung zum spanenden Bearbeiten eines Werkstücks (102), umfassend
- eine Einbringeinrichtung (104) zum Einbringen eines Schmiermittels im fließfähigen Zustand in mindestens eine Ausnehmung (118, 120) des Werkstücks (102);
- mindestens ein Bearbeitungswerkzeug (150) zur spanenden Bearbeitung des Werkstücks, das bei der Bearbeitung in direkten Kontakt mit dem Schmiermittel kommt und durch das Schmiermittel geschmiert wird, wobei das Schmiermittel bei der Bearbeitung des Werkstücks (102) mittels des Bearbeitungswerkzeugs (150) vom festen in den flüssigen Zustand übergeht; und
- eine Einrichtung (164, 166, 168, 170) zum Überführen des restlichen Schmiermittels in dem Werkstück (102) in den fließfähigen Zustand und zum Entfernen des Schmiermittels aus dem Werkstück (102),
zur Durchführung eines Verfahrens zum spanenden Bearbeiten eines Werkstücks (102), bei dem
- ein Schmiermittel im fließfähigen Zustand in mindestens eine Ausnehmung (118, 120) des Werkstücks (102) eingebracht wird;
- das Werkstück spanend bearbeitet wird, wobei das Werkstück (102) bei der Bearbeitung in direkten Kontakt mit dem Schmiermittel kommt und durch das Schmiermittel geschmiert wird, wobei das Schmiermittel bei der Bearbeitung des Werkstücks (102) mittels des Bearbeitungswerkszeugs (150) vom festen in den flüssigen Zustand übergeht; und
- das restliche Schmiermittel in dem Werkstück (102) in den fließfähigen Zustand überführt und aus dem Werkstück (102) entfernt wird.

## Claims

1. Method for machining a workpiece (102) with chip removal, comprising the following:
- introducing a lubricant in the flowable state into at least one recess (118, 120) of the workpiece (102);
- solidifying the lubricant in the recess (118, 120);
- machining the workpiece (102) with chip removal, during which at least one machining tool (150) comes into direct contact with the lubricant and is lubricated by the lubricant, the lubricant changing from the solid to the liquid state during the machining of the workpiece (102) by means of the machining tool (150);
- transforming the remaining lubricant in the recess (118, 120) of the workpiece (102) into the flowable state and removing the lubricant from the workpiece (102).

2. Method according to claim 1, **characterised in that** the lubricant is introduced in the molten state into the recess (118, 120) of the workpiece (102).

3. Method according to either of claims 1 or 2, **characterised in that** a lubricant is used, the solidification point of which is higher than approximately 60°C, preferably higher than approximately 65°C.

4. Method according to any one of claims 1 to 3, **characterised in that** a lubricant is used, which comprises a wax, preferably a paraffin wax.

5. Method according to any one of claims 1 to 4, **characterised in that** the at least one recess (118, 120) has a lubricant introduction opening and at least one further access opening, which is closed by means of a closure element (144) during the introduction of the lubricant.

6. Method according to claim 5, **characterised in that** the closure element (144) is removed from the workpiece (102) before the machining of the workpiece (102) with chip removal.

7. Method according to claim 5, **characterised in that** the closure element (144) remains on the workpiece (102) during the machining of the workpiece (102) with chip removal.

8. Method according to any one of claims 1 to 7, **characterised in that**, before the machining of the workpiece with chip removal, a portion of the lubricant is introduced into a recess (120) of the workpiece (102), which recess is not machined during the machining of the workpiece (102) with chip removal.

9. Method according to any one of claims 1 to 8, **characterised in that** the lubricant is introduced into the at least one recess (118, 120) of the workpiece (102) in a lubricant introduction station (104), the workpiece (102) is then conveyed into a machining station (106), the workpiece (102) is then machined with chip removal in the machining station (106), the workpiece (102) is then conveyed into a lubricant removal station (108) and the lubricant remaining in the workpiece (102) is then removed from the workpiece (102) in the lubricant removal station (108).

10. Method according to any one of claims 1 to 9, **characterised in that** the lubricant is removed from the workpiece (102), **in that** the workpiece (102) is heated and rotated during and/or after heating.

11. Method according to claim 10, **characterised in that** the workpiece (102) is heated by being acted on by a heated fluid, preferably with heated air.

12. Use of a device for machining a workpiece (102) with chip removal, comprising
- an introduction mechanism (104) for introducing a lubricant in the flowable state into at least one recess (118, 120) of the workpiece (102);
- at least one machining tool (150) for machining the workpiece with chip removal, which, during machining, comes into direct contact with the lubricant and is lubricated by the lubricant, the lubricant changing from the solid to the liquid state during the machining of the workpiece (102) by means of the machining tool (150); and
- a mechanism (164, 166, 168, 170) for transforming the remaining lubricant in the workpiece (102) into the flowable state and to remove the lubricant from the workpiece (102).
in order to carry out a method for machining a workpiece (102) with chip removal,
wherein
- a lubricant in the flowable state is introduced into at least one recess (118, 120) of the workpiece (102);
- the workpiece is machined with chip removal, the workpiece (102) coming into direct contact with the lubricant during machining and being lubricated by the lubricant, the lubricant changing from the solid to the liquid state during the machining of the workpiece (102) by means of the machining tool (150); and
- the remaining lubricant in the workpiece (102) is transformed into the flowable state and removed from the workpiece (102).

## Revendications

1. Procédé pour l'usinage d'une pièce (102) par enlèvement de copeaux, comprenant les étapes suivantes :
✔ introduction d'un lubrifiant à l'état fluide dans au moins une cavité (118, 120) de la pièce (102) ;
✔ solidification du lubrifiant dans la cavité (118, 120) ;
✔ usinage de la pièce (102) par enlèvement de copeaux, pendant lequel au moins un outil d'usinage (150) vient en contact direct avec le lubrifiant et est lubrifié par le lubrifiant, le lubrifiant passant de l'état solide à l'état liquide pendant l'usinage de la pièce (102) au moyen de l'outil d'usinage (150) ;
✔ passage à l'état fluide du lubrifiant résiduel dans la cavité (118, 120) de la pièce (102) et retrait du lubrifiant de la pièce (102).

2. Procédé selon la revendication 1, **caractérisé en ce que** le lubrifiant est introduit à l'état de fusion dans la cavité (118, 120) de la pièce (102).

3. Procédé selon l'une des revendications 1 ou 2, **caractérisé en ce qu'**un lubrifiant est utilisé, dont le point de figeage est supérieur à 60 °C environ, de préférence supérieur à 65 °C environ.

4. Procédé selon l'une des revendications 1 à 3, **caractérisé en ce qu'**un lubrifiant est utilisé, lequel comprend une cire, de préférence une cire de paraffine.

5. Procédé selon l'une des revendications 1 à 4, **caractérisé en ce que** l'au moins une cavité (118, 120) comporte une ouverture d'introduction de lubrifiant et au moins une autre ouverture d'accès, laquelle est obturée au moyen d'un élément d'obturation (144) pendant l'introduction du lubrifiant.

6. Procédé selon la revendication 5, **caractérisé en ce que** l'élément d'obturation (144) est retiré de la pièce (102) avant l'usinage de la pièce (102) par enlèvement de copeaux.

7. Procédé selon la revendication 5, **caractérisé en ce que** l'élément d'obturation (144) reste sur la pièce (102) pendant l'usinage d'une pièce (102) par enlèvement de copeaux.

8. Procédé selon l'une des revendications 1 à 7, **caractérisé en ce qu'**avant l'usinage de la pièce par enlèvement de copeaux, une partie du lubrifiant est introduite dans une cavité (120) de la pièce (102), laquelle n'est pas usinée lors de l'usinage de la pièce (102) par enlèvement de copeaux.

9. Procédé selon l'une des revendications 1 à 8, **caractérisé en ce que** le lubrifiant est introduit sur une station d'introduction de lubrifiant (104) dans l'au moins une cavité (118, 120) de la pièce (102),
✔ la pièce (102) est ensuite transportée vers une station d'usinage (106),
✔ la pièce (102) est ensuite usinée par enlèvement de copeaux sur la station d'usinage (106),
✔ la pièce (102) est ensuite transportée vers une station de retrait de lubrifiant (108), et
✔ le lubrifiant résiduel dans la pièce (102) est ensuite retiré de la pièce (102) sur la station de retrait de lubrifiant (108).

10. Procédé selon l'une des revendications 1 à 9, **caractérisé en ce que** le lubrifiant est retiré de la pièce (102) par chauffage de la pièce (102) et rotation de celle-ci pendant et/ou après le chauffage.

11. Procédé selon la revendication 10, **caractérisé en ce que** la pièce (102) est chauffée par exposition à un fluide chauffé, de préférence à de l'air chauffé.

12. Utilisation d'un dispositif pour l'usinage d'une pièce (102) par enlèvement de copeaux, comprenant :
✔ un moyen d'introduction (104) pour l'introduction d'un lubrifiant à l'état fluide dans au moins une cavité (118, 120) de la pièce (102) ;
✔ au moins un outil d'usinage (150) pour l'usinage de la pièce par enlèvement de copeaux, lequel vient en contact direct avec le lubrifiant pendant l'usinage et est lubrifié par le lubrifiant, le lubrifiant passant l'état solide à l'état liquide pendant l'usinage de la pièce (102) au moyen de l'outil d'usinage (150) ; et
✔ un moyen (164, 166, 168, 170) de passage à l'état fluide du lubrifiant résiduel dans la pièce (102) et de retrait du lubrifiant de la pièce (102),
pour l'exécution d'un procédé pour l'usinage d'une pièce (102) par enlèvement de copeaux, où
✔ un lubrifiant est introduit à l'état fluide dans au moins une cavité (118, 120) de la pièce (102) ;
✔ la pièce est usinée par enlèvement de copeaux, ladite pièce (102) venant en contact direct avec le lubrifiant pendant l'usinage et étant lubrifiée par le lubrifiant, ledit lubrifiant passant de l'état solide à l'état liquide pendant l'usinage de la pièce (102) au moyen de l'outil d'usinage (150) ; et
✔ le lubrifiant résiduel dans la pièce (102) est passé à l'état fluide et retiré de la pièce (102).
